# EUROPEAN PATENT APPLICATION

(11) **EP 4 620 300 A1**
(43) Date of publication of application: **24.09.2025**
(21) Application number: 25164050.4
(22) Date of filing: 17.03.2025
(51) Int. Cl.: A01L 11/00, A01L 15/00

(54) **REMOVABLE BLADE FOR HOOF NIPPER**

(30) Priority: 17.03.2024 US 202463566326 P
(71) Applicant: Garner, Joshua Israel, Grover Beach, CA 93433 (US)
(72) Inventor: Garner, Joshua Israel, Grover Beach, CA 93433 (US)
(74) Representative: Franke, Dirk

(57) **Abstract**

The invention provides a removable hoof nipper blade and hoof nipper incorporating the removable blade. The removable blade is adapted to be removably secured to the jaw end of the hoof nipper and provides a convenient means for a farrier to maintain a hoof nipper in a sharp condition without the need to sharpen the blades of the hoof nipper or keeping multiple hoof nippers on hand.

## Description

### CROSS-REFERENCE TO RELATED APPLICATIONS

This application claims the benefit of U.S. provisional application No. 63/566,326, filed March 17, 2024, the entire contents of which are incorporated herein by reference for all purposes.

### FIELD OF THE INVENTION

The invention is in the field of farrier tools. More particularly, the invention relates to a removable blade for hoof nippers.

### BACKGROUND

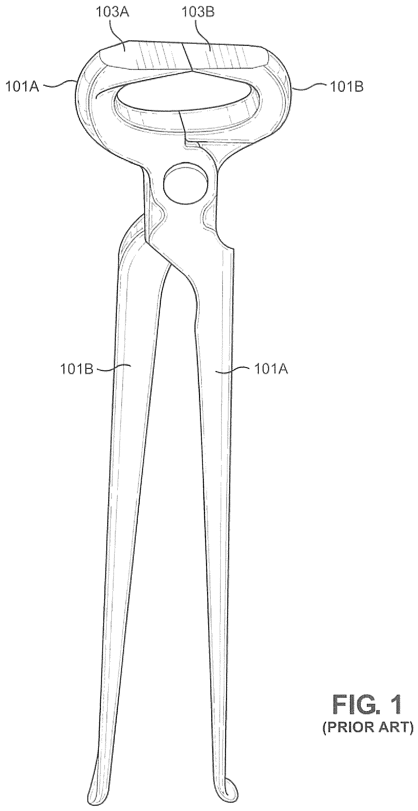

Farriers use hoof nippers for trimming and the care of horse hooves. FIG. 1 shows a known hoof nipper featuring a pair of opposing jaws 101A and 101B connected to their respective handles 102A and 102B, wherein handles 102A and 102B are pivotably connected to one another. The opposing jaws terminate in blades 103A and 103B which contact one another when the handles are closed thereby enabling the blades to perform a clipping function.

With known hoof nippers, such as depicted in FIG. 1, the opposing jaws and blades are formed from a single, continuous material such that the blades are incapable of being removed. When the blades become dull or damaged, which invariably results from continued use, the blades must be sharpened thereby rendering the hoof nippers unavailable for use. Thus, in order to work without interruption, a farrier will need to have multiple pairs of hoof nippers in order to have an adequately sharp tool available, or sharpen the hoof nippers resulting in an interruption of work. Alternatively, the farrier may use a dull hoof nipper which places considerable strain on the farrier's hands and forearms as more force must be applied for dull hoof nippers to perform their clipping function.

### SUMMARY OF THE INVENTION

The inventor surprisedly discovered a removable blade for hoof nippers. The inventive removable blade allows a farrier to keep multiple sharpened blades on hand for use with a single pair of hoof nippers. Thus, a farrier with access to the inventive removable blade can work without needing to keep multiple hoof nippers on hand thereby avoiding the cost of purchasing multiple tools and the interruption of work that results from having hoof nippers sharpened. The inventive removable blade also avoids the need for the farrier to obtain, and have ready, sharpening tools and the interruption of work that occurs when hoof nippers must be sharpened.

The inventive removable blade also enables a farrier to avoid using dull hoof nippers if the farrier does not have multiple hoof nippers on hand, or if the farrier elects not to sharpen the blades, such as due to time constraints or a lack of access to a sharpening service or sharpening tools. Thus, the inventive removable blade allows a farrier to avoid strain on the hands and forearms due to the use of a dull tool. The inventive removable blade also decreases the amount of time it takes to acquire a sharpened hoof nipper as the removable blade can be installed in a fraction of the time it takes to sharpen a hoof nipper.

In some aspects, the invention provides a removable blade for use with a hoof nipper tool, wherein the removable blade comprises a planar body, a tapered male dovetail connection that is adapted to mate with a female tapered dovetail connection on the jaw end of the hoof nipper tool, an aperture for releasably fixing the removable blade to the hoof nipper tool, and a cutting edge.

In another aspect, the invention provides a hoof nipper tool comprising: a pair of removable blades wherein each removable blade includes a planar body, a tapered male dovetail connecting body, an aperture for releasably fixing the removable blade to a jaw end of a hoof nipper tool, and a cutting edge; a pair of opposing handles; a pair of jaw shoulders at terminal ends of the handles, wherein the jaw shoulders pivotably connect the handles to one another by a pin; a pair of opposing heel portions located between the handles and the jaw shoulders, wherein the opposing heel portions contact one another and form a stop when the hoof nipper is in a fully closed state; a pair of opposing jaw ends at a terminal end of the hoof nipper opposite the handles, wherein the jaw ends each include a tapered female dovetail connection that is adapted to receive the tapered male dovetail connection of the removable blade; and a threaded aperture in each of the jaw ends, wherein the threaded apertures are adapted to receive a screw and fix the removable blades to the jaw ends.

### BRIEF DESCRIPTION OF THE DRAWINGS

FIG. 1 shows a known hoof nipper.
FIG. 2 shows a bottom perspective view of an embodiment of the inventive removable blade.
FIG. 3 shows a top perspective view of an embodiment of the inventive removable blade.
FIG. 4 shows a side view of an embodiment of the inventive removable blade.
FIG. 5 shows a bottom view of an embodiment of the inventive removable blade.
FIG. 6 shows a bottom perspective view of an embodiment of the jaw end of a hoof nipper for use with an embodiment of the inventive removable blade.
FIG. 7 shows a side perspective view of an embodiment of the jaw end of a hoof nipper for use with an embodiment of the inventive removable blade.
FIG. 8 shows a plan view of a jaw end of a hoof nipper with an embodiment of the removable blade substantially installed therein.
FIG. 9 shows an embodiment of a hoof nipper in a closed state, wherein the hoof nipper incorporates an embodiment of the removable blades of the invention.
FIG. 10 shows an arm of an embodiment of the inventive hoof nipper that includes a handle, heel, jaw shoulder and jaw end.

The figures referred to above are not necessarily drawn to scale and should be understood to present a representation of the invention, illustrative of the principles involved. Some features of the devices and components depicted in the drawings may be enlarged or distorted relative to others to facilitate explanation and understanding. The same reference numbers are used in the drawings for similar or identical components of the inventive devices and their components. The devices and components, as disclosed herein, will have configurations determined, in part, by the intended application and environment in which the inventive devices are used.

### DETAILED DESCRIPTION

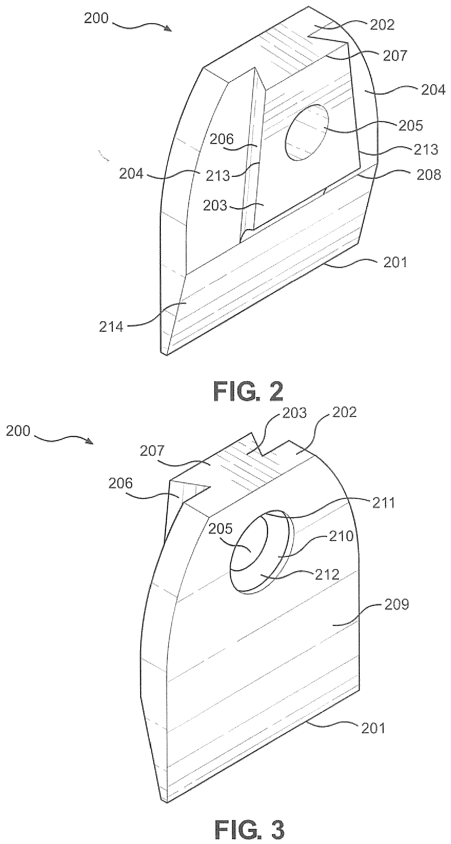

FIG. 2 provides a bottom perspective view of an embodiment of the inventive removable blade. Removable blade 200 comprises cutting edge 201 forming a forward end of removable blade 200 opposite removable blade rear end 202. Cutting edge 201 is sharpened and adapted to trim the hooves of horses and other equids, and cloven-hooved animals, for example. Removable blade 200 comprises connecting body 203 rising above the plane of base portion 204. Connecting body 203 comprises aperture 205 which traverses removable blade 200. Connecting body 203 further comprises a pair of opposing connecting body sides 206. Connecting body 203 has a pair of opposing connecting body edges 213 along the length of connecting body 203. Connecting body edges 213 define the width of the lower surface of connecting body 203. Connecting body 203 tapers vertically such that the portion of connecting body 203 that meets base portion 204 has a width that is less than the width of the surface of connecting body 203 as defined by connecting body edges 213. Connecting body 203 assumes a male dovetail configuration wherein the connecting body tapers along its length from forward connecting body end 208 towards rear connecting body end 207. Thus, rear connecting body end 207 has a width that is less than the width of forward connecting body end 208.

FIG. 3 shows a top perspective view of removable blade 200 with top planar surface 209 displayed. Aperture 205 traverses removable blade 200, including connecting body 203, and terminates in countersunk opening 210 on top surface 209. Thus, aperture 205 has a diameter that is less than countersunk opening 210. Countersunk opening 210 is adapted to mate with the head of a screw, while aperture 205 is adapted to receive the shank or threads of the screw. The inside of countersunk opening 210 comprises rear aperture surface 211 which opposes forward aperture surface 212. Countersunk opening 210 can have a circumference that is arced or beveled. Countersunk opening 210 can have a profile that is adapted to mate with a screw head having a tapering profile, such as, for example, a bugle screw head, an 82 degree flat screw head, an 82 degree flat undercut screw head, a 100 degree flat screw head, an oval screw head, an oval undercut screw head, a trim screw head, or a wafer screw head. In some non-limiting embodiments, aperture 205 terminates at top surface 209 wherein aperture 205 has the same diameter throughout removable blade 200 and connecting body 203 such that countersunk opening 210 is omitted.

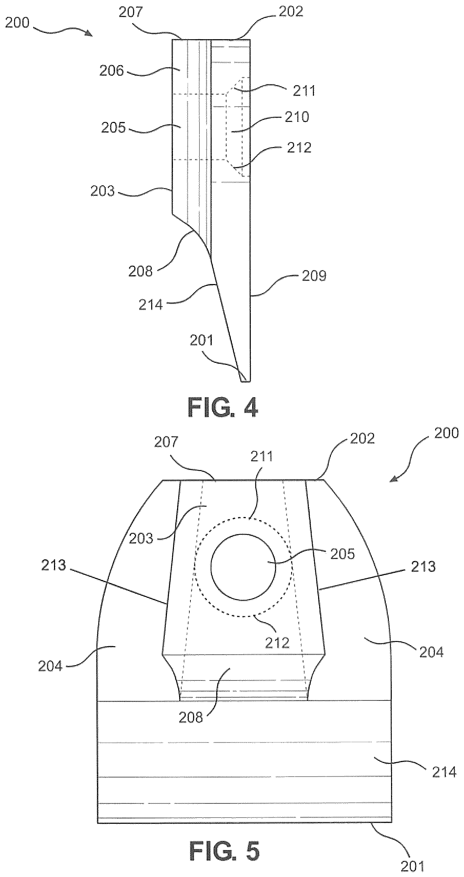

FIG. 4 is a side view of removable blade 200 showing aperture 205 traversing removable blade 200 and connecting body 203 and terminating in countersunk opening 210. Removable blade rear end 202 is shown at the top of the figure, and cutting edge 201 is shown at the bottom of the figure. While forward connecting body end 208 is shown as having an arced surface, it will be appreciated that forward connecting body end 208 can assume other geometries, such as, for example, a straight surface such that the surfaces of forward connecting body end 208 and cutting edge body 214 form an acute angle having a vertex where forward connecting body end 208 meets cutting edge body 214. FIG. 5 shows a bottom view of removable blade 200 wherein aperture 205 traverses removable blade 200, and connecting body 203, and communicates with countersunk opening 210 on top surface 209 of removable blade 200. Base portions 204 are planar portions and are located on opposing sides of connecting body 203.

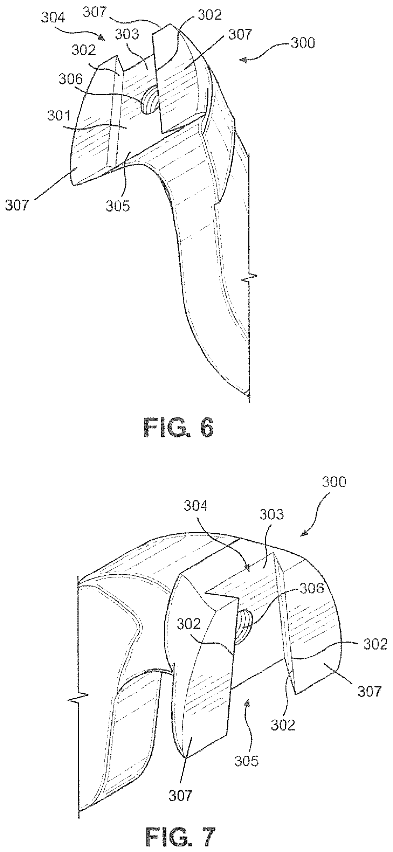

FIGS. 6 and 7 show an embodiment of the jaw end of a hoof nipper for use with removable blade 200. Jaw end 300 comprises connecting body opening 301 which is a tapering female dovetail opening that is adapted to receive connecting body 203 in a mating dovetail relationship. Connecting body opening 301 is bordered by a pair of opposing connecting body sides 302 and planar connecting body surface 303. Jaw end 300 includes a pair of opposing planar jaw surfaces 308 which are adapted to mate with base portions 204 of removable blade 200 when removable blade 200 is installed in jaw end 300. As with connecting body 203, connecting body opening 301 is tapered such that the width of rear connecting body opening 304 is narrower than the width of forward connecting body opening 305. Connecting body surface 303 comprises jaw aperture 306 which is a threaded opening that and adapted to receive a screw threaded therein. Jaw aperture 306 can be a blind hole having a depth sufficient to receive the threads of a screw when the screw secures removable blade 200 in jaw end 300.

Removable blade 200 is installed in jaw end 300 by placing rear connecting body end 207 in forward connecting body opening 305. Connecting body 203 is then advanced towards rear connecting body opening 304 such that the dovetail relationship of connecting body 203 and connecting body opening 301 causes connecting body sides 206 to mate with connecting body sides 302 when connecting body 203 is fully inserted into connecting body opening 301. In this installed configuration, connecting body 203 is prevented from advancing further into connecting body opening 301 due to the mating of the tapered dovetail connection. In the installed configuration, screw 405 can be threaded into aperture 205 on jaw aperture 306 to lock removable blade 200 in place.

In some embodiments, the engineering fit and tolerances between connecting body 203 and connecting body opening 301 is such that connecting body 203 can be fully mated with connecting body opening 301 under the force of a user's hand. In other embodiments, referred to herein as the "offset embodiments," the engineering fit and tolerances between connecting body 203 and connecting body opening 301 is such that connecting body 203 can only be substantially mated with connecting body opening 301 under the force of a user's hand.

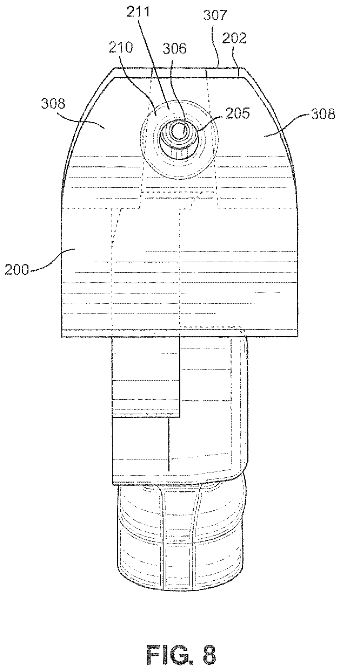

FIG. 8 shows an "offset embodiment" wherein connecting body 203 has been substantially mated with connecting body opening 301 under the force of a user's hand such that removable blade rear end 202 is offset below jaw end 307. In offset embodiments, the center of aperture 205 is slightly offset from the center of jaw aperture 306 when connecting body 203 is substantially mated with connecting body opening 301, with the center of aperture 205 of removable blade 200 being biased away from jaw end 307. In offset embodiments, threading a screw, having a tapered head, into jaw aperture 306 causes the tapered surface of the screw head to contact rear aperture surface 211 of countersunk opening 210 thereby forcing connecting body 203 into connecting body opening 301 under tension such that connecting body 203 becomes fully mated with connecting body opening 301. Thus installed, the mating dovetail connection between connecting body 203 and connecting body opening 301 firmly installs removable blade 200 within jaw end 300 of a hoof nipping tool such that opposing removable blades are permitted to perform a precise clipping function wherein opposing cutting edges 201 meet one another along their lengths with little or no tolerance and without play in the blades.

As disclosed herein, connecting body 203 can mate with connecting body opening 301 in a tapering dovetail relationship. The mating can occur fully under the force of a user's hand, or substantially under the force of a user's hand in the offset embodiments disclosed herein. It will be understood that the engineering fit between connecting body 203 and connecting body opening 301 is tighter than the engineering fit between connecting body 203 and connecting body opening 301 in those embodiments wherein connecting body 203 can fully mate with connecting body opening 301 under the force of a user's hand. The engineering fit between connecting body 203 and connecting body opening 301 can be a close running fit, a sliding fit, a location fit, or a transition fit (*e.g.*, similar fit or fixed fit). Connecting body 203 can mate with connecting body opening 301 under an ISO hole basis of H8/f7 and a shaft basis of F8/h7, an ISO hole basis of H7/g6 and a shaft basis of G7/h6, an ISO hole basis of H7/h6 and a shaft basis of H7/h6, an ISO hole basis of H7/k6 and a shaft basis of K7/h6, or an ISO hole basis of H7/n6 and a shaft basis of N7/h6. Connecting body 203 can mate with connecting body opening 301 wherein the fit tolerance has a clearance of up to 0.0005 inches, up to 0.001 inches, up to 0.005 inches, up to 0.010 inches, or up to 0.05 inches.

Without being limited to any particular theory or mechanism, the arrangement of the offset embodiments forms a strong connection between removable blade 200 and jaw end 300 such that the load placed on removable blade 200 during clipping operations is borne by the tapered dovetail connection between connecting body 205 and connecting body opening 301 rather than a screw threaded into jaw aperture 306. The offset embodiments can also ensure the precise alignment of removable blade 200 within jaw end 300. Such a precise alignment is instrumental as the cutting edges of a hoof nipper must contact one another completely along the length of the cutting edges of hoof nipper blades in order for a hoof nipper tool to adequately perform its clipping function.

In the offset embodiments disclosed herein, the diameter of aperture 205 can be larger than the diameter of jaw aperture 306 in order to expose the threads of jaw aperture 306 as the centers of aperture 205 and jaw aperture 306 will be offset from one another when connecting body 203 is substantially inserted into connecting body opening 301 under the force of a user's hand. Alternatively, aperture 205 can assume an oblong shape, or have a cutout on the side of aperture 205 nearest rear connecting body end 207, so as to expose the threads of jaw aperture 306 when the centers of aperture 205 and jaw aperture 306 are offset from one another.

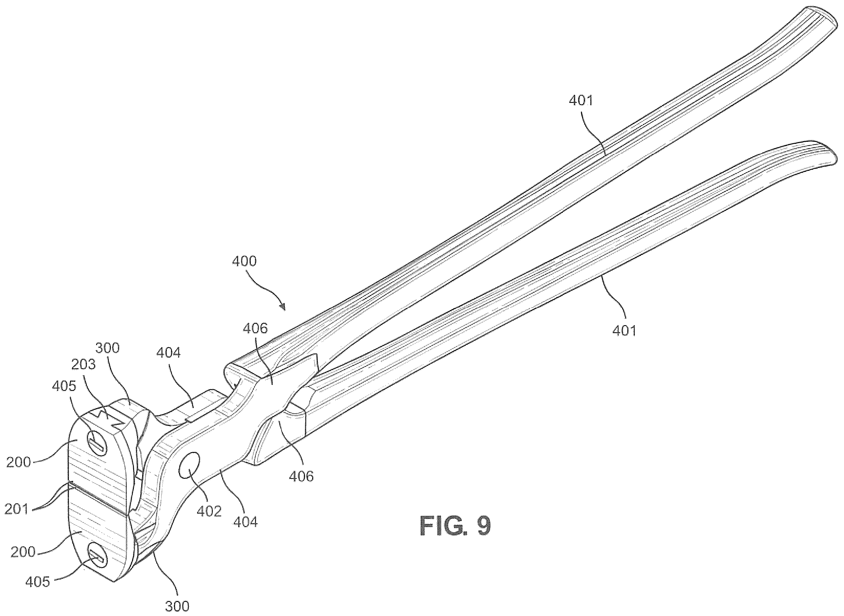

In some embodiments, the invention provides a hoof nipper tool incorporating a pair of removable blades 200 and a pair of opposing jaw ends 300 as disclosed herein. FIG. 9 shows a non-limiting embodiment of a hoof nipper of the invention. As shown, hoof nipper 400 comprises a pair of opposing handles 401 pivotably connected to one another by pin 402 which occupies pin apertures 403 in jaw shoulders 404. Pin apertures 403 traverse jaw shoulders 404 and form a through hole through jaw shoulders 404 for receiving pin 402 when the hoof nipper is in its assembled state as shown in FIG. 8. Removable blades 200 are each secured in jaw ends 300 by connecting body 203, connecting body opening 301 and screw 405 as disclosed herein. Heels 406 are located between handles 401 and jaw shoulders 404 and may function as a stop when hoof nipper 400 is in a fully closed state. Hoof nipper 400 is depicted in a closed state wherein cutting edges 201 of removable blades 200 are in contact with one another along the lengths of cutting edges 201. In the device's fully closed state, opposing handles 401 can be prevented from further advancing towards one another by cutting edges 201 contacting one another, heels 406 contacting one another, or a combination thereof. While not explicitly depicted in FIG. 9, it will be understood that removable blades 200 can be secured to jaw ends 300 through the offset embodiment disclosed herein.

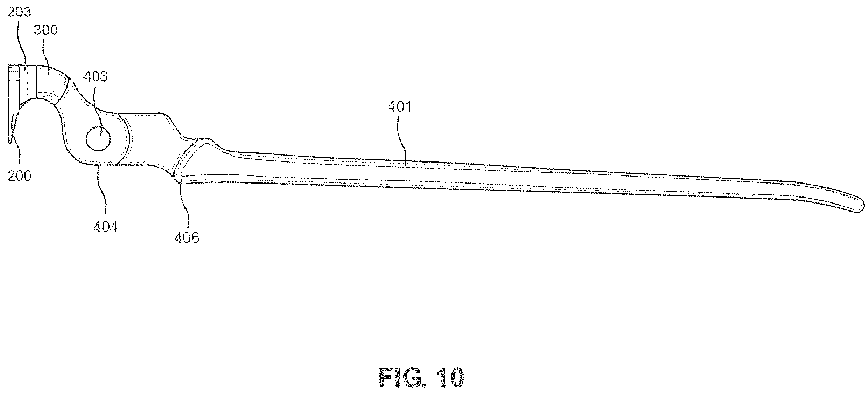

FIG. 10 shows a side view of an arm of an embodiment of hoof nipper 400 having removable blade 200 installed therein. It will be understood that the inventive hoof nipper in its assembled state will have a pair of opposing arms rotatably connected to one another by pin 402. As shown in FIG. 10, the arm includes jaw end 300 at a terminal end and distal from handle 401. The arm further includes pin aperture 403, jaw shoulder 404 and heel 406 positioned between handle 401 and jaw shoulder 404. Removable blade 200 is shown installed in jaw end 300, it being understood that connecting body 203 of removable blade 200 is nested within connecting body opening 301 of jaw end 300.

In some embodiments, the invention provides a method of trimming the hooves of an equid or animal having cloven hooves. The method can be practiced by providing hoof nipper 400 having removable blades 200 installed therein. Handles 401 are separated from one another to place hoof nipper 400 in an open state wherein jaw shoulders 404 rotate relative to one another around pin 402 such that cutting edges 201 of removable blades 200 are separated from one another to achieve a desired gap for inserting a portion of a hoof that is to be trimmed. Handles 401 are then compressed causing jaw shoulders 404 to rotate relative to one another around pin 402 causing cutting edges 201 to contact and clip the hoof portion as cutting edges 201 contact one another. These steps are then repeated to achieve a desired amount of hoof trimming.

If one or more of cutting edges 201 of removable blades 200 are dull or damaged, or it is desired to otherwise remove removable blades 200 from hoof nipper 400, such as to select a removable blade having a different cutting edge length, screw 405 is unscrewed and removed from threaded jaw aperture 306. Connecting body 203 is then slid out of connecting body opening 301 whereupon clearance of connecting body rear end 207 from forward connecting body opening 305 of jaw end 300 results in removable blade 200 being completely withdrawn from jaw end 300. It will be understood that in the offset embodiments disclosed herein, it may be necessary to tap removable blade rear end 202 in order to remove the blade from jaw end 300 due to the tolerance of fit between connecting body 203 and connecting body opening 301.

With removable blade 200 removed from jaw end 300, a replacement removable blade 200 can be installed within jaw end 300. The replacement removable blade 200 is installed by placing forward connecting body end 208 in forward connecting body opening 305 in jaw end 300. Removable blade 200 is then advanced towards rear connecting body end 207 until connecting body 203 becomes fully positioned within connecting body opening 301 whereupon mating of the tapered dovetail connection between connecting body 203 and connecting body opening 301 prevents further advancement of connecting body 203 within connecting body opening 301. Screw 405 is then threaded into jaw aperture 306 thereby securing removable blade 200 within jaw end 300.

In the offset embodiments disclosed herein, advancement of connecting body 203 into connecting body opening 301 under the force of a user's hand is insufficient to fully mate connecting body 203 within connecting body opening 301 due to the tolerance of fit between connecting body 203 and connecting body opening 301. In offset embodiments of the invention, placing connecting body 203 into connecting body opening 301 under the force of a user's hand results in the center of aperture 205 of removable blade 200 being offset from the center of jaw aperture 306, with the center of aperture 205 being biased towards forward connecting body opening 305 of jaw end 300. In this substantially mated configuration, aperture 205 is sufficiently aligned with jaw aperture 306 to permit screw 405 to be threaded into jaw aperture 306. This alignment can be achieved, for example, by aperture 205 having a diameter that is larger than the threads of screw 405. Alternatively, the alignment can be achieved by aperture 205 having the profile of an oblong opening, wherein the longitudinal axis of the oblong opening is perpendicular to the longitudinal axis of cutting edge 201. With connecting body 203 substantially mated with connecting body opening 301, screw 405 is threaded into jaw aperture 306 whereupon contact between the tapered head of screw 405 with rear aperture surface 211 of countersunk opening 210 forces connecting body 203 to fully mate with connecting body opening 301 as screw 405 is threaded into jaw aperture 306.

In some embodiments, the invention provides a hoof nipper kit for assembling a hoof nipper tool, wherein the kit includes hoof nipper 400, one or a plurality of removable blades 200, and one or a plurality of screws 405. It will be appreciated that hoof nipper 400 can be provided as an individual tool, wherein hoof nipper 400 is provided to a user without removable blades 200. Similarly, removable blades 200 can be provided to a user individually, such as providing removable blades 200 for the replacement of removable blades that have become dull, damaged or lost.

The components of hoof nipper 400 can be made from any material suitable for providing a tool capable of trimming the hooves of equids and animals having cloven hooves. Suitable materials include, but are not necessarily limited to, stainless steel, chrome-vanadium steel, 4130 steel, 4140 steel, CPM^{®} S90V steel, CPM^{®} M4 steel, or combinations thereof. In some non-limiting embodiments, removable blade 200 is manufactured from CPM^{®} S90V steel or CPM^{®} M4 steel, and the remainder of the components of hoof nipper 400 are manufactured from stainless steel, chrome-vanadium steel, 4130 steel, 4140 steel or combinations thereof.

### REFERENCE CHARACTERS

200 - Removable Blade
201 - Cutting Edge
202 - Removable Blade Rear End
203 - Connecting Body
204 - Base Portion
205 - Aperture
206 - Connecting Body Sides
207 - Rear Connecting Body End
208 - Forward Connecting Body End
209 - Top Surface
210 - Countersunk Opening
211 - Rear Aperture Surface
212 - Forward Aperture Surface
213 - Connecting Body Edges
214 - Cutting Edge Body
300 - Jaw End
301 - Connecting Body Opening
302 - Connecting Body Sides
303 - Connecting Body Surface
304 - Rear Connecting Body Opening
305 - Forward Connecting Body Opening
306 - Jaw Aperture
307 - Jaw End
308 - Jaw Surface
400 - Hoof Nipper
401 - Handles
403 - Pin Aperture
404 - Jaw Shoulders
405 - Screw
406 - Heel

## Claims

1. A hoof nipper, comprising:
a) a pair of opposing handles;
b) a pair of jaw shoulders, each positioned on a distal end of the handles;
c) a pin traversing the jaw shoulders, wherein the pin rotatably connects the jaw shoulders to one another; and
d) a pair of jaw ends, each positioned at a distal end of the jaw shoulders, wherein the jaw ends each include an first connector adapted to removably mate with a second connector of a hoof nipper blade.

2. The hoof nipper of claim 1, wherein the first connector is a jaw end opening and the second connector is a connecting body.

3. The hoof nipper of claim 2, wherein the jaw end opening tapers along a length of jaw end opening.

4. The hoof nipper of claim 3, wherein the jaw end opening terminates in a first end opening and a second end opening, wherein the first end opening is wider than the second end opening.

5. The hoof nipper of claim 4, wherein the hoof nipper has a longitudinal axis and the first end opening is nearer the longitudinal axis than the second end opening.

6. The hoof nipper of any one of claims 2 to 5, wherein the jaw end opening has a threaded aperture therein.

7. The hoof nipper of any one of claims 2 to 6, wherein the jaw end opening is a female dovetail connection and the connecting body is a male dovetail connection.

8. The hoof nipper of claim 7, wherein the jaw ends have a planar surface on either side of the female dovetail connection.

9. The hoof nipper of any one of claims 1 to 8, further comprising a pair of hoof nipper blades, each having the second connector.

10. The hoof nipper of claim 9, wherein the second connector is a connecting body.

11. The hoof nipper of claim 10, wherein the connecting body tapers along a length of the connecting body.

12. The hoof nipper of claim 11, wherein the connecting body has a first end and a second end, and the second end is wider than the first end.

13. The hoof nipper of any one of claims 10 to 12, wherein the connecting body is a male dovetail connection.

14. The hoof nipper of any one of claims 9 to 13, wherein (i) the hoof nipper blades each have a planar surface having an aperture therein, and (ii) the aperture is adapted to receive a screw.

15. The hoof nipper of claim 14, wherein the aperture has a countersunk opening.
